# EUROPEAN PATENT APPLICATION

(11) **EP 2 280 531 A1**
(43) Date of publication of application: **02.02.2011**
(21) Application number: 10005599.5
(22) Date of filing: 28.05.2010
(51) Int. Cl.: H04M 3/42, H04M 7/00, H04M 3/53

(54) **Unified communication system**

(30) Priority: 08.07.2009 US 499607
(71) Applicant: IntelePeer, Inc., San Mateo CA 94403 (US)
(72) Inventor: Ward, John, Johnstown, CO 80534 (US); Haydar, Haba, Burlingame, CA 94010 (US); Studt, Charles, Belmont, CA 94002 (US); Antypas, Peter, Emeryville, CA 94608 (US); Green, Jonathan, Littleton, CO 80127 (US)
(74) Representative: Hertz, Oliver

(57) **Abstract**

A unified communication system is disclosed that allows a variety of end point types to participate in a communication event using a common, unified communication system. In some implementations, a calling party interacts with a client application residing on an endpoint to make a communication request to another endpoint. A communication event manager residing in the unified communication system selects a script from a repository of scripts based on the communication event and the capabilities of the endpoints. A communication event execution engine receives a user profile associated with at least one of the endpoints. The user profile can be configured by the user to describe the user's preferences for how the communication should be processed by the unified communication system.

## Description

### TECHNICAL FIELD

This subject matter relates generally to communication systems.

### BACKGROUND

Conventional communication systems are designed around a particular technology. For example, the Public Switched Telecommunications Network (PSTN) was designed to support telephone calls and data over long distances, VoIP networks are designed to support telephone calls and data over the Internet using Internet Protocol (IP), Short Message Service (SMS) and other text messaging technologies are designed to support text messaging over the Internet, and cellular networks are designed to support cellular telephone calls and data over a cellular network.

Modem endpoints (e.g., phone, email, text messaging) integrate several communication technologies allowing the users of these devices to communicate with other users in a variety of ways. For example, with a single mobile device a user can make telephone calls, send text messages, surf the Web, download content, receive and send email messages and communicate directly with other devices using wireless technologies (e.g., Bluetooth, Wi-Fi, WiMAX). These hybrid communication devices often rely on several carriers to establish and maintain communication channels, such as cellular network systems and Internet Service Provider (ISP) systems.

### SUMMARY

A unified communication system is disclosed that allows a variety of end point types to participate in a communication event using a common, unified communication system. In some implementations, a calling party interacts with a client application residing on an endpoint to make a communication request to another endpoint. A communication event manager residing in the unified communication system selects a script from a repository of scripts based on the communication event and the capabilities of the endpoints. A communication event execution engine receives a user profile associated with at least one of the endpoints. The user profile can be configured by the user to describe the user's preferences for how the communication should be processed by the unified communication system.

In some implementations, the communication request can be made, for example, through a Web access layer. The client application can use an Application Programming Interface (API) and/or framework for facilitating the handling of communication requests. The selected script can be executed by a feature server, taking into account the user profile of the requested party. The feature server can be, for example, a Softswitch or virtual PBX which is operable to perform various communication tasks over a packet-switched network, such as dialing endpoints, bridging call legs and facilitating Integrated Voice Response (IVR) exchanges.

The unified communication system described above uses scripts and user profiles to support communication requests for a variety of endpoints. A user profile allows a user to specify multiple endpoints having a variety of capabilities for use in the unified communication system, including how the user desires to be contacted through those endpoints. The unified communication system provides a user with a common, unified communication system for all the user's endpoints, while also providing the user with a means to specify their preferences for communicating with other endpoints regardless of the user's geographic location, the time of day, or the type of endpoint operated by the user.

### BRIEF DESCRIPTION OF THE DRAWINGS

FIG. 1 is a block diagram of an example unified communication system.

FIG. 2 illustrates an example software architecture for the unified communication system of FIG. 1.

FIG. 3 illustrates example properties provided by endpoints to the unified communication system of FIG. 1.

FIG. 4 is a diagram illustrating an example telephone to telephone communication event between User A and User B.

FIG. 5 is a diagram illustrating an example text message to telephone communication event between User A and User B.

FIG. 6 is a diagram illustrating an example telephone to email communication event between User A and User B.

### DETAILED DESCRIPTION

### Example Unified Communication System

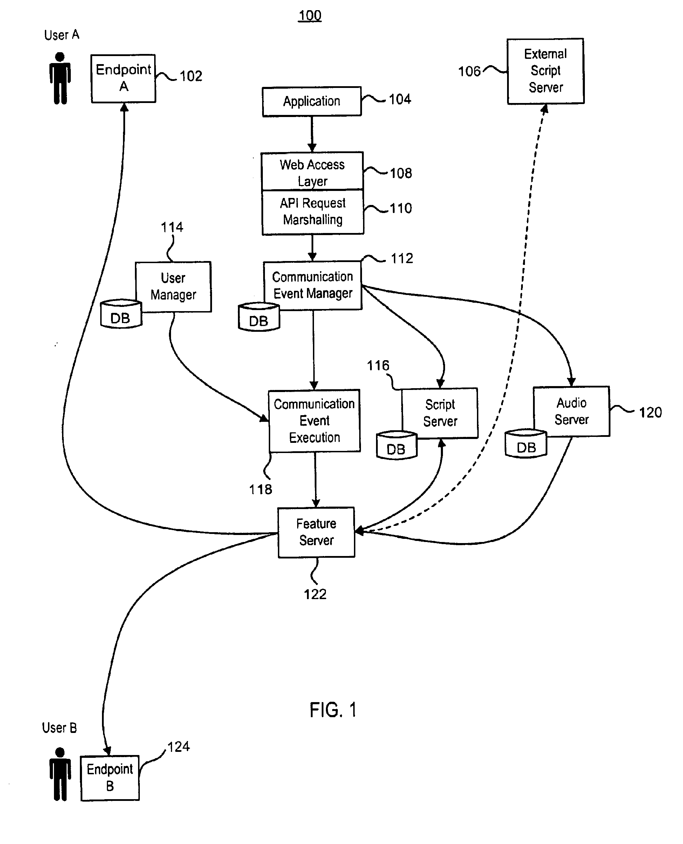

FIG. 1 is a block diagram of an example unified communication system 100. In some implementations, the system 100 includes an external script server 106, web access layer 108, an API request marshalling module 110, a communication event manager 112, a user manager 114, a script server 116, a communication event execution module 118, an audio server 120 and a feature server 122.

The system 100 can be used by two or more endpoints 102, 124 (only two endpoints are shown for clarity) for communicating with each other. The endpoints 102, 124 can have the same or different capabilities. For example endpoint 102 can have only text messaging capability of type Instant Messenger, whereas endpoint 124 can receive only telephone calls. In such a scenario, a text message generated by endpoint 102 would be converted from text to speech, so that the text message can be recorded and played back to the user of endpoint 124. Similarly, if endpoint 102 is an email only device, then the email message text would be converted from text to speech, so that the email message can be recorded and played back to the user of endpoint 124.

In some implementations, a client application 104 resides on the endpoints 102, 124 and allows user's of these endpoints to make communication requests with other endpoints. The application 104 can present a user interface for allowing a user to request communication with one or more endpoint. For example, the user interface can include a virtual dial-pad for dialing a telephone number or a contact card with a number that the user can click or touch to invoke a call request. In some implementations the user interface is a browser window or other application window with an embedded click-to-call link that the user clicks or touches to invoke a communication request.

In some implementations, the application 104 uses an API or framework to make communication requests. The communication requests are received by the APT request marshaling module 110 which aggregates or "marshals" the communication requests for processing. The communication requests are forwarded to the communication event manager 112. The communication event manager 112 analyzes the communication requests and identifies one or more communication events to be executed by the communication event execution engine 118. The communication event execution engine 118 retrieves user profiles associated with the endpoints participating in the communication event. The user profiles can be stored in a database coupled to the user manager 114. Users can create and edit their profiles through the Web access layer 108 or any other suitable user interface. Generally, a user profile describes a user's preferences for executing a particular communication event. In some implementations, the user profile can specify how to communicate with each of the user's endpoints at a particular time of day. For example, if a user is not in their office during the day, the profile can include the user's preference that the user's cell phone be called first, followed by the user's other endpoints in a particular order which can also be specified by the user. User preferences can include but are not limited to: the specification of a hunt group, default voice numbers, default texts, and any other user preference related to communication events.

The communication event manager 112 can select one or more scripts from a number of scripts stored in a database coupled to a script server 116 to perform the communication request. A script is set of instructions which can be executed to affect specific actions, such as, for example, establishing and tearing down communication channels between two or more endpoints. The communication event manager 112 can, if needed, contact an audio server 120 which can provide various audio services, including text-to-speech conversion and speech-to-text conversion. This would occur, for example, if one of the endpoints is a text messaging only device. The audio server 120 can also provide recordings to be played back to requestors for various communication events, such as customized messages created by the requestor. For example, a custom recorded message can indicate that a requested party is not in the office between certain times of the day but can be reached on a mobile device.

The feature server 122 can be a Softswitch or virtual PBX. The feature server 122 can be implemented using, for example, "Astericks™," which is publicly available open source Softswitch. In some implementations, the feature server 122 establishes and monitors communication connections between endpoints participating in a communication event. The feature server 122 is operable to implement various basic communication events over a packet-switched network (e.g., the Internet), such as dialing endpoints, bridging call legs, text to speech conversion, and managing Integrated Voice Response (IVR) exchanges.

In some implementations, an external script server 106 can be used instead of, or in addition to, the script server 116. The external script server 106 can be used to execute custom scripts prepared by third party developers. The external script server 106 can present a customer-facing user interface that allows enterprise users to customize scripts for communication events that are tailored to how the enterprise conducts its business.

### Example Software Architecture

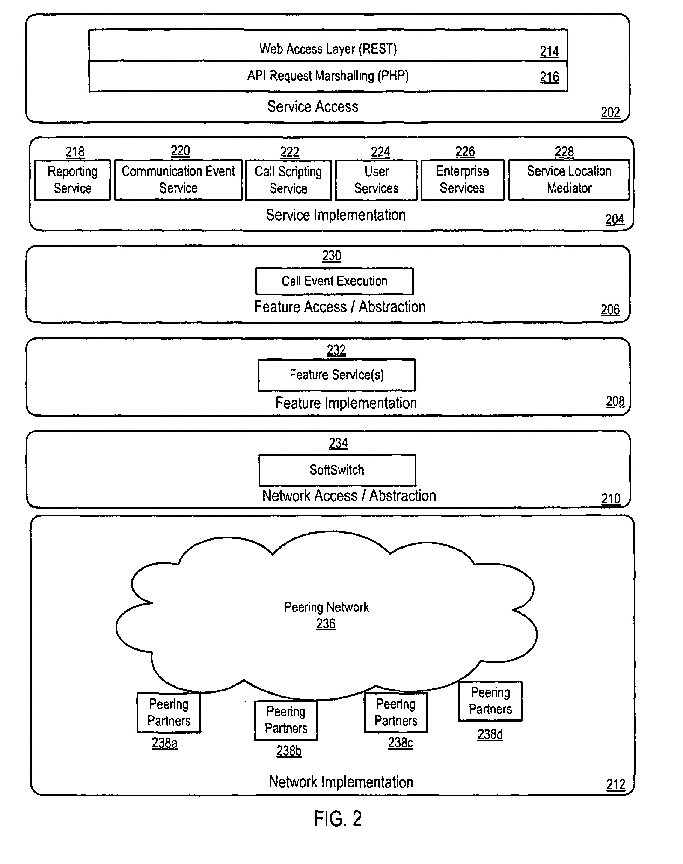

FIG. 2 illustrates an example software architecture 200 for the unified communication system 100 of FIG. 1. In some implementations, the architecture 200 includes a service access layer 202, a service implementation layer 204, a feature access/abstraction layer 206, a feature implementation layer 208, a network access/abstraction layer 210 and a network implementation layer 212.

The service access layer 202 can include a Web access layer 214. In some implementations, the Web access layer 214 can be implemented using Representational State Transfer (REST) network architecture principals. Any user interface, however, which transmits domain-specific data over HTTP without an additional messaging layer can be used. Additionally, XML or HTTP interfaces which follow a model of remote procedure call (RPC) can be used as part of the Web access layer 214. The Web access layer 214 receives API requests from applications running on endpoints.

The API request marshalling module 216 aggregates API requests from applications and submits the requests to the communication event manager (e.g., the communication event manager 112) for scheduling. In some implementations, the API request marshalling module 216 can be implemented using as server-side scripting language (e.g., PHP: Hypertext Preprocessor (PHP)). Other scripting languages can be used, including but not limited to Perl and C. PHP.

The service implementation layer 204 includes a number of services used by the unified communication system 100. These services can include but are not limited to: a reporting service 218, a communication event service 220, a call scripting service 222, a user service 224, an enterprise service 226 and a service location mediator service 228.

In some implementations, the enterprise service 226 can manage aspects of customers and products for an enterprise. The enterprise service 226 can handle various tasks from application provisioning to user and group administration for the enterprise. The enterprise service 226 can also handle application and user credentials and authentication.

In some implementations, the user service 224 can manage individual user accounts, including but not limited to: Find Me service preferences, Follow Me service preferences, number management, do not disturb lists, call blocking lists, endpoint device capabilities and other services specific to users. Find Me service allows the user to receive calls at any location. Follow Me service allows the user to be reached at any of several phone numbers.

In some implementations, the communication event service 220 can manage scheduling and dispatching of call events. More particularly, the communication event service 220 can manage which communication event execution service the call will be dispatched to, the assignment of call identifiers, and any validations that may need to be performed, including but not limited to: fraud identification, nuisance callers and abuse, explicit user blocking, etc. The communication event service 220 can also manage feature server features that the call is assigned to. For example, the communication event service 220 can handle initiation of calls, bridging or conferencing of calls. The communication event service 220 can also provide interfaces for IVR, text to speech, speech to text and the playing of audio files.

In some implementations, the call scripting service 222 can choreograph the flow of a call by allowing scripting of commands in the communication event service 220. The call scripting service 222 can be written in any programming language so long as it conforms to a command set provided by the communication event service 220. The communication event service 220 is told which call scripting service 222 to communicate with, and which script is to be invoked for the given communication event. In some implementations, an event script server can be located at the customer's premises and integrated directly with the customer's systems.

In some implementations, the reporting service 218 can provide detailed information about call setup and teardown, Quality Of Service (QoS) metrics, call duration, about individual calls, user groups, enterprises, and users within an enterprise, etc. The reporting service 218 can provide reports that allow enterprises to manage their customer base, handle customer billing and perform various other tasks.

In some implementations, one or more service location mediators 228 act as brokers for API requests from one or more API request marshalling modules 216. The mediators 228 can be broker processes (e.g., Common Object Requesting Broker Architecture (CORBA)) that manage multiple instances of application services, such as the reporting service 218, the user service 224, the enterprise service 226 and the call scripting service 222. The mediators 228 provide a layer of transparency between one or more Web access layers 214 and one or more instances of application services. Such an architecture allows for flexibility and extensibility. Each instance of an application service set can have its own database which can share data, forming failover pairs, as described below.

The feature access/abstraction layer 206 can include a communication event execution engine 230 which is responsible for executing communication events according to user profiles provided by a user manager (e.g., user manager 114). The communication event execution engine 230 communicates with a feature server (e.g., feature server 122) for establishing communication between endpoints.

In some implementations, the mediators 228 can hold registration addressing information related to other services. When an application requests the location of a specific service, the application will receive the address information of registered services that can fulfill the request. If the application cannot communicate with a given service, the application can choose to use another registered service. In this way, N number of services can be made available to handle application requests, providing geographic redundancy and horizontal performance scaling. Additionally, because a service registration can have attributes, distinctly different environments can be registered and made available to their intended targets. For example, a test, integration, and production environment can be registered with a single set of mediators 228. By allowing each environments to register with different attributes, and by allowing a web service to request by attribute, the applications can land on their intended environment.

The communication event manager 112 can be organized into pairs so that each "instance" of a service can have a dedicated failover pair. This failover architecture can be implemented by using a primary and a secondary service arrangement. Once a call event is scheduled, the call event can be placed in a database coupled to the communication event manager 112, which can be read by its peer communication event manager. The secondary service can be configured to execute communication events that are N seconds late. The assumption is that if the communication event has not been executed within that timeframe, the primary service is either down or overloaded. In this way, failover can be accomplished without explicit token passing or special logic to determine if the primary service is functional.

The feature implementation layer 208 can include feature services 232 for providing various communication control features, such as dialing endpoints, bridging call legs, managing IVR exchanges, and any other communication control functions.

The network access/abstraction layer 210 can include code for handling network access. The layer 210 can include a software switch (Softswitch), virtual PBX, media gateway controller, call agent or gatekeeper. In some implementations, a Softswitch is a software-based switching platform that includes an API for bridging PSTN and Voice over Internet Protocol (VoIP) by linking PSTN to IP networks and managing multimedia traffic, including but not limited to voice, fax, data and video. The Softswitch processes signaling for all types of packet protocols (e.g., SIP).

The network implementation layer 212 can include a peering network 236 including one or more peering partners 238. The peering network 236 can be a voluntary interconnection of separate networks operated by peering partners 238 for the purpose of exchanging traffic between the customers of each network. The separate networks can be physically interconnected, allowing for an exchange of routing information through a routing protocol (e.g., Border Gateway Protocol (BGP)). The networks can be packet-switched networks (e.g., the Internet) or any other type of network.

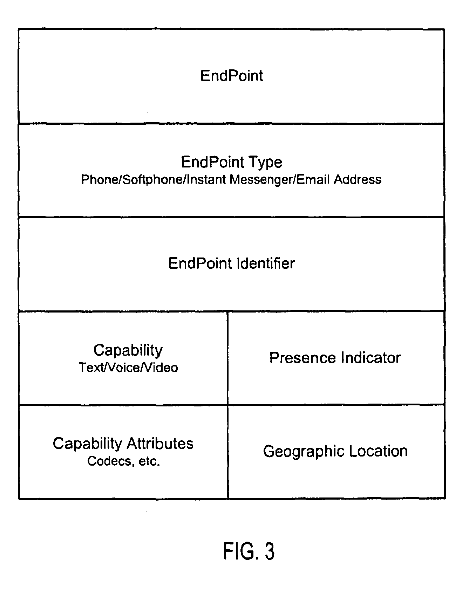

FIG. 3 illustrates example properties provided by endpoints to the unified communication system of FIG. 1. Referring to FIG. 3, each endpoint is associated with an endpoint type and an endpoint identifier. Endpoint types can include but are not limited to: phones, soft phone, Instant Messaging (IM), email address, etc. Each endpoint identifier is associated with a list of capabilities, a presence indicator, capability attributes and a geographic location. Some examples of capabilities include text, voice and video. An example capability attribute is a codec.

Each endpoint type is associated with a presence indicator for indicating when the endpoint is available to communicate. The presence indicator can be shared with other endpoints to alert potential requestors of the availability of the endpoint to receive communications.

The geographic location can be provided by one or more positioning technologies integrated with or coupled to an endpoint, including but not limited to: Global Positioning System (GPS), cell tower triangulation and Wi-Fi positioning (e.g., Skyhook™ wireless location service). The geographic location can be used in mapping applications, location-based service applications and any other application that utilizes geographic locations of endpoints.

The unified communication system can use the endpoint properties to determine how best to service communication requests. For example, if the endpoint type for each participating device in a communication event is endpoint type "phone," the unified communication system will select a "telephone to telephone" script to establish a telephone connection. If, however, a participating device has an endpoint type of "Instant Messaging," and the other participating device has an endpoint type of "phone," then the unified communication system will select an "Instant Messaging to telephone script" to establish communication between the participating endpoints, including invoking a text to speech process to convert text messages generated by the endpoint of endpoint type "Instant Messaging" into an audio recording that can be played on the endpoint of endpoint type "phone."

### Example Phone To Phone Communication

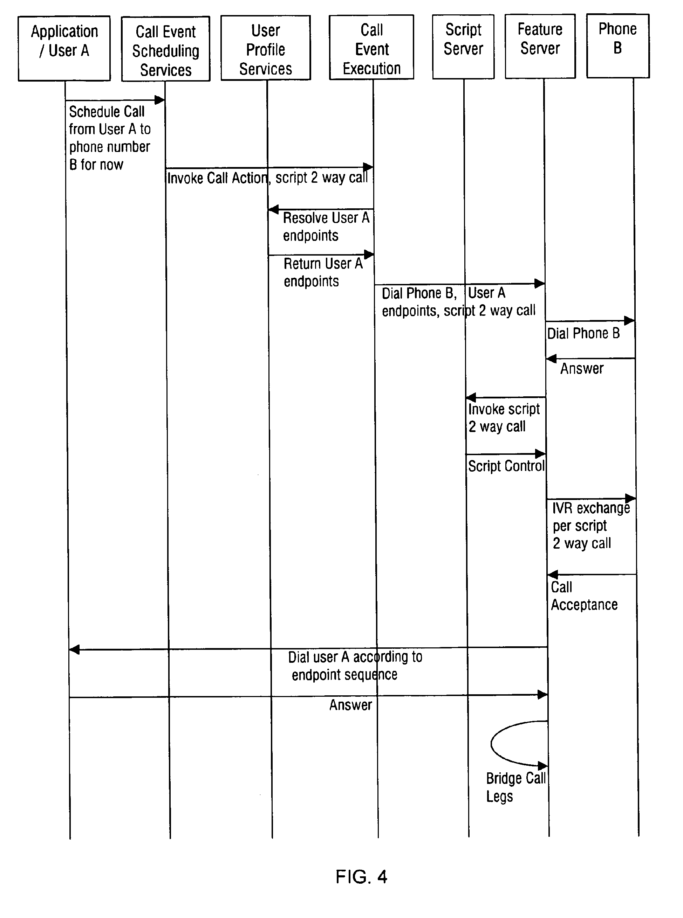

FIG. 4 is a diagram illustrating an example telephone to telephone communication event between User A and User B. The y-axis represents time which increases from the top of the figure to the bottom of the figure. The unified communication system components participating in the communication event are indicated at the top of the figure. In this example, the components are the application/User A, call event scheduling services, user profile services, call event execution, script server, feature server and a recipient device operated by User B.

In this first communication scenario, a phone to phone communication is initiated by User A with User B. An application running on a first endpoint (e.g., User A's mobile phone) schedules a call to a second endpoint (e.g., User B's mobile phone). The scheduling is handled by call event scheduling service. Call event scheduling service invokes a call action by selecting a two-way call script which is executed by call event execution. Call event execution calls user profile services to request the User A profile which can be used to determine or resolve User A endpoints, as well as call control preferences. User profile services returns the User A profile to call event execution which passes the profile and two-way call script to feature server. Feature server dials User B's phone and waits for User B's phone to answer. When an answer is received, feature server calls script server to invoke the two-way call script. Script server sends a script control to feature server for execution. Feature server executes the script control to manage an IVR exchange according to the two-way script and waits for a call acceptance from User B's phone. When a call acceptance is received by feature server, feature server dials User A's phone according to the endpoint sequence in User A's profile. When feature server receives an answer from User A's phone, feature server bridges the call legs to establish a two-way call connection.

### Example Text To Phone Communication

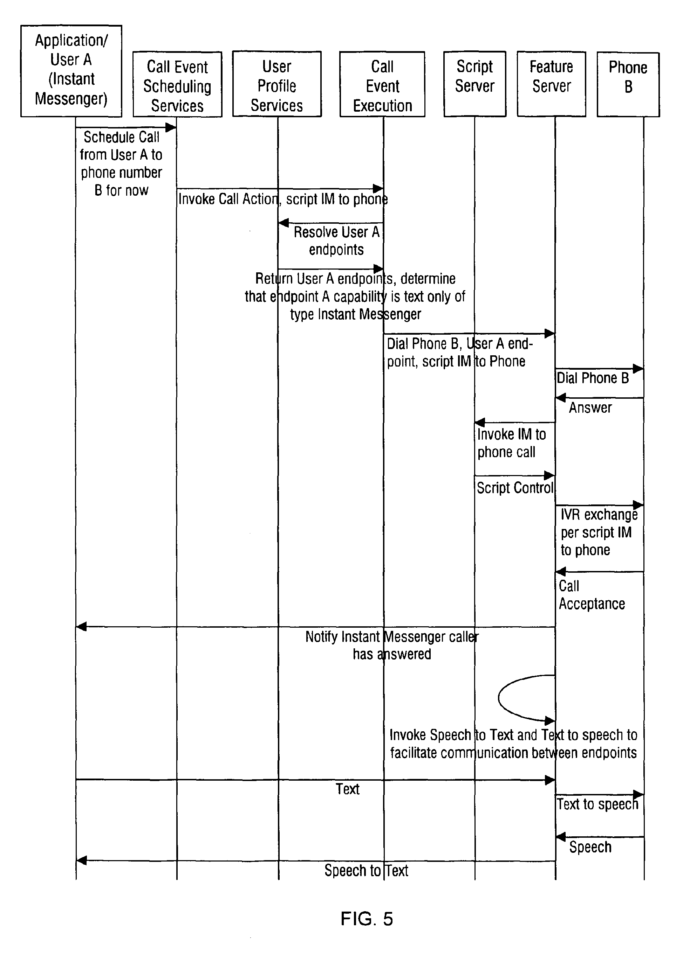

FIG. 5 is a diagram illustrating an example text message to telephone communication event between User A and User B. In this example, a first endpoint operated by User A having an endpoint type of "Instant Messaging" requests communication with a second endpoint operated by User B and having an endpoint type of "phone." An application running on User A's text messaging device schedules a call to User B's phone. The scheduling is handled by call event scheduling service. Call event scheduling service invokes a call action by selecting an IM to phone script which is executed by call event execution. Call event execution calls user profile services to request the User A profile which can be used to determine or resolve User A endpoints, as well as call control preferences. User profile services returns the User A profile to call event execution which passes the profile and the IM to phone script to feature server. In this example, the user profile indicates that User A's endpoint has Instant Messaging capability.

Feature server dials User B's phone and waits for User B's phone to answer. When an answer is received by feature server, feature server calls script server to invoke the IM to phone script. Script server sends a script control to feature server for execution. Feature server executes the script control to manage an IVR exchange according to the IM-phone script and waits for a call acceptance from User B's phone. When a call acceptance is received by feature server, feature server notifies User A's phone that User B has answered. User A's endpoint sends the text to feature server. Feature server invokes speech to text and text to speech services to facilitate communication between User A's text messaging device and User B's phone.

### Example Phone To Email Communication

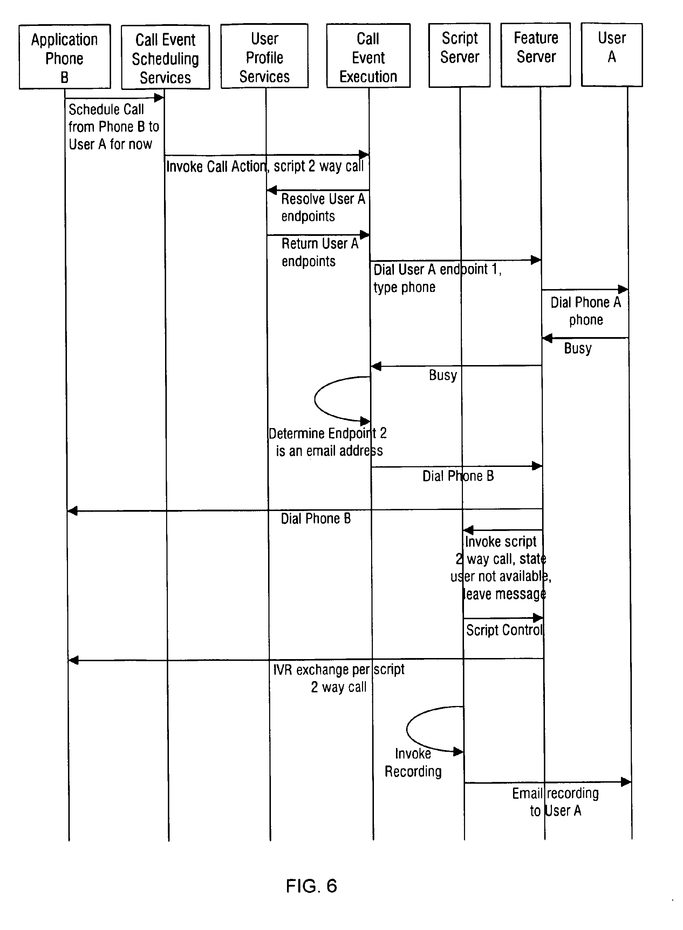

FIG. 6 is a diagram illustrating an example telephone to email communication event between User A and User B. In this example, a first endpoint operated by User B has an endpoint type of "phone" and requests communication with a second endpoint operated by User A having an endpoint type of "email." An application running on the first endpoint (e.g., User B's phone) schedules a call to the second endpoint (e.g., User A's email device). The scheduling is handled by call event scheduling service. Call event scheduling service invokes a call action by selecting a two-way call script which is executed by call event execution. Call event execution calls user profile services to request the User A profile which can be used to determine or resolve User A endpoints, as well as call control preferences. User profile services returns the User A profile to call event execution which passes the profile and the two-way call script to feature server. In this example, the user profile indicates that User A's endpoint has email capability only.

Feature server dials User A's phone and waits for User A's phone to answer. When a busy signal is received by feature server, feature server notifies call event execution which determines that the second endpoint is an email address. Call event execution instructs feature server to dial User B's phone. Feature server dials User B's phone and instructs script server to invoke the two-way call script which plays a recording on User B's phone that User A is not available and to leave a message. Script server sends a script control to feature server. Feature server executes the script control to perform an IVR exchange according to the two-way call script. The script control invokes a recording to generate an email recording, then sends the email recording to User A's email.

The example communication scenarios described above are only examples. Other communication scenarios are possible based on the types of endpoints participating in the communication event and the profiles of the users of the endpoints.

The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., Objective-C, Java), including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computer system can include clients and servers. A client and server are generally remote from each other and typically interact through a network. The relationship of client and server arises by virtue of computer programs running on the respective computers and having a client-server relationship to each other.

A number of implementations of the invention have been described. Nevertheless, it will be understood that various modifications can be made without departing from the spirit and scope of the invention. Accordingly, other implementations are within the scope of the following claims.

## Claims

1. A computer-implemented method comprising:
receiving a request from a first endpoint for establishing communication with a second endpoint;
determining a communication preference from a user profile associated with the first or second endpoint;
if the requested communication is a text message or email,
converting the text message or email to a speech signal;
establishing communication between the first endpoint and the second endpoint according to the communication preference; and
sending the speech signal to the second endpoint at least partially over a packet-switched network; and
if the requested communication is a telephone call,
establishing a telephone call between the first endpoint and the second endpoint according to the communication preference, where the telephone call is established at least partially over a packet-switched network.

2. The method of claim 1, further comprising:
determining a capability of at least one of the first endpoint and the second endpoint;
selecting a script from a plurality of scripts according to the determined capability; and
using the script for establishing communication between the first and second endpoints at least partially over a packet-switched network.

3. A communication system, comprising:
a first interface configured for receiving a request from a first endpoint for facilitating a communication event with a second endpoint; and
a processor coupled to the first interface and configured for:
determining a communication preference from a user profile associated with the first or second endpoint;
determining whether the communication event includes a text message, email or telephone call; and
establishing communication between the first endpoint and the second endpoint based on the communication event and the communication preference.

4. The communication system of claim 3, where the processor is configured for:
determining a capability of at least one of the first endpoint and the second endpoint;
selecting a script from a plurality of scripts according to the determined capability; and
using the script for establishing communication between the first and second endpoints at least partially over a packet-switched network.

5. The communication system of claim 3, where the interface is a Web access layer.

6. The communication system of claim 3, further comprising:
a text-to-speech converter configured for converting the text message or email to a speech signal to be played at the second endpoint, if the communication event is a text message or email.

7. The communication system of claim 4, further comprising:
a second interface configured for receiving a script from an external script server.

8. The communication system of claim 3, where the user profile includes one or more of the following: at least one description related to an endpoint device, a do not disturb list, a call blocking list, a Find Me service preference, or a Follow Me service preference.
